# EUROPEAN PATENT APPLICATION

(11) **EP 3 531 540 A1**
(43) Date of publication of application: **28.08.2019**
(21) Application number: 18157827.9
(22) Date of filing: 21.02.2018
(51) Int. Cl.: H02K 9/04, F03D 9/25

(54) **COOLING APPARATUS AND METHOD FOR AN ELECTRICAL GENERATOR**

(71) Applicant: Siemens Gamesa Renewable Energy A/S, 7330 Brande (DK)
(72) Inventor: Airoldi, Giovanni, 8000 Aarhus (DK)
(74) Representative: Aspacher, Karl-Georg

(57) **Abstract**

The present invention regards a method for cooling an electrical generator (11) which includes a stator (20) and rotor (30) and a cooling apparatus (19). The rotor comprises a plurality of coil windings (636) and the cooling apparatus (19) includes a plurality of cooling installations (425) in the stator (20). The method includes:
dividing the electrical generator (11) into a plurality of sectors (430) each including one or more coil windings (636) and one or more cooling installations (425),
for each sector (430) operating the respective one or more cooling installations (425) as a function of at least one temperature measured in the respective one or more coil windings (636).

## Description

### Field of invention

The present invention relates to the technical field of electric generators, in particular electric generators for wind turbines. Specifically, the present invention relates to a cooling apparatus and method for an electric generator comprising a plurality of cooling fans. Further, the present invention relates to an electric generator and to a wind turbine both comprising such a cooling apparatus.

### Art Background

In the above mentioned technical field of wind turbines, the electrical generator, and in particular the stator and the rotor, has to be cooled, in order to optimize the efficiency and achieve the highest possible value of generated electrical power. Various air cooling systems are known in the art for cooling the electrical generator in a wind turbine.

For example, in wind turbine of great dimensions and more particularly in large direct drive offshore wind turbines, the electrical generators therein installed may be cooled with a plurality of fans installed at the periphery of the stator and regularly distributed around the rotational axis of the wind turbine.

The cooling of the generator may be controlled by simply switching on or off a sub-set of such plurality of fans as a function of the maximum end winding temperature. A plurality of different threshold temperatures may be preliminarily defined together with a respective plurality of cooling powers respectively required at the threshold temperatures. Once one of such predefined threshold temperatures has been reached, a number of cooling fans are correspondently activated, which provide the required cooling power for such predefined threshold temperature.

This strategy control is not optimal, because it considers only the maximum generated temperature, without taking into account where such temperature was generated.

The object of the present invention is to improve or optimize the cooling of an electrical generator, by providing a cooling apparatus and method, which take into account the above described drawback.

### Summary of the Invention

In order to achieve the object defined above, a method and an apparatus for cooling an electrical generator is provided in accordance to the independent claims. The dependent claims describe advantageous developments and modifications of the invention.

According to a first aspect of the invention, a method for cooling an electrical generator is provided. The electrical generator includes a stator and rotor and a cooling apparatus. The rotor comprises a plurality of coil windings; the cooling apparatus includes a plurality of cooling installations in the stator. The method includes:
dividing the electrical generator into a plurality of sectors each including one or more coil windings and one or more cooling installations,
for each sector operating the respective one or more cooling installations as a function of at least one temperature measured in the respective one or more coil windings.

According to a second aspect of the invention, a cooling apparatus for an electrical generator is provided. The cooling apparatus has a rotor comprising a plurality of coil windings and includes a plurality of cooling installations in the stator and a control system for operating the cooling installations according to the above described method.

This invention can be efficiently adapted to the cooling apparatus comprised in an electric generator of a wind turbine.

The described cooling method and apparatus are based on the idea that instead of using the maximum temperature to control all the cooling installations, all temperatures measured in the coil windings can be used to operate the cooling installations. Each of the cooling installations may be operated depending on the temperature of the adjacent coil winding or of the adjacent end winding.

This control strategy allows reducing the electric consumption for running the cooling installations and to focus on the hotspot(s) on the coil winding, which are the limiting factor for the power produced by the electrical generator.

As a result of the individual cooling installation control, the temperatures distribution of the end windings is more even, thus allowing a uniform usage of the lifetime of the windings insulation.

The present invention allows the reduction of energy consumption and the consequent increase in the Annual Energy Production (AEP) of a wind turbine.

According to embodiments of the present invention, for each sector the respective one or more cooling installations is switched on or off as a function of at least one temperature measured in the respective one or more coil windings.

This strategy could be used when cooling installations with single speed fans are installed: each fan could be switched on when the temperature of the closest coil windings, or more particularly of the closes end winding, reaches a predetermined set value and could be switched off otherwise.

According to other embodiment of the present invention, each cooling installations comprises at least one ventilation device, the speed of each ventilation device being controlled as a function of at least one temperature measured in the respective one or more coil windings.

According to specific embodiment of the present invention, the speed of each ventilation device may be changed when a threshold temperature is measured in the respective one or more coil windings.

In particular, when the ventilation devices are provide with a frequency converter then their speed may be advantageously controlled. This carries several advantages:
- ventilation devices operating at partial load are more efficient than fans operating at full load allowing lower electrical consumption for the same cooling power,
- no backflow from the generator through the inactive fans will be possible when all fans are switched on at the same time,
- the lifetime of the ventilation devices and of the respective motors is increased.

According to other embodiment of the present invention, the stator of the electrical generator is ideally divided into a plurality of circular sectors around a rotational axis of the electrical generator. In particular, the circular sectors may be all equal and have the same central angle on a plane perpendicular to the rotational axis. Advantageously, each of the circular sectors may comprise one respective cooling installation, installed for example along the periphery of the stator. Advantageously, in each circular sector the respective cooling installation is dedicated to the cooling of a respective plurality of coil windings or, more particularly, end windings.

It has to be noted that embodiments of the invention have been described with reference to different subject matters, more specifically with reference to a cooling method or to a cooling apparatus for an electrical generator. However, a person skilled in the art will gather from the above and the following description that, unless other notified, in addition to any combination of features belonging to one type of subject matter also any combination between features relating to different subject matters is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine comprising an electric generator in accordance with an embodiment of the invention.
- Figure 2: shows the stator assembly with a plurality of cooling installations.
- Figure 3: shows an illustration of solely the plurality of cooling installations.
- Figure 4: shows a cross section of an accommodation space formed by an outer frame structure of the stator assembly.
- Figure 5: shows the stator assembly with a plurality of stator segments.

### Detailed Description

The illustrations in the drawings are schematic. It is noted that in different figures, similar or identical elements are provided with the same reference signs.

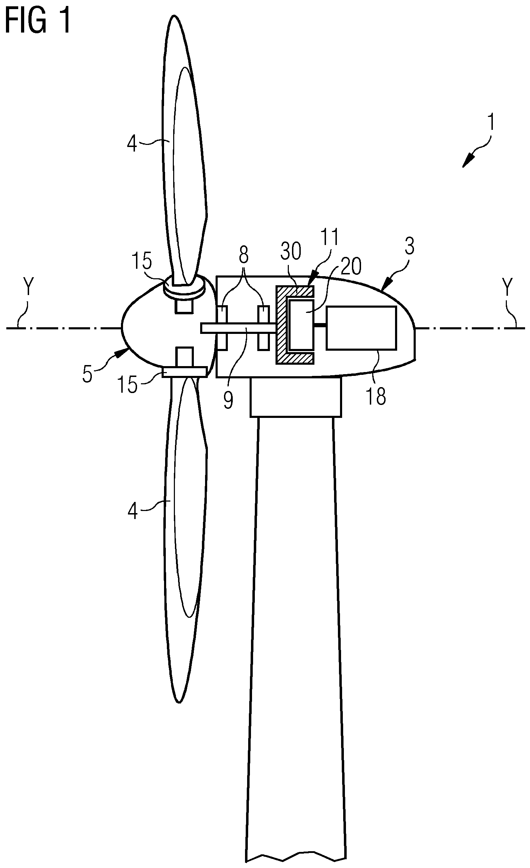

**Figure 1** shows a wind turbine 1 according to the invention. The wind turbine 1 comprises a tower 2, which is mounted on a non-depicted foundation. A nacelle 3 is arranged on top of the tower 2.

The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y.

The blades 4 extend substantially radially with respect to the rotational axis Y and along a respective longitudinal axis X.

In general, when not differently specified, the terms axial, radial and circumferential in the following are made with reference to the rotational axis Y.

The wind turbine 1 comprises an electric generator 11, including a stator 20 and a rotor 30. The rotor 30 is rotatable with respect to the stator 20 about the rotational axis Y.

The wind rotor 5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.

The wind rotor 5 comprises three flanges 15 for connecting a respective blade 4 to the wind rotor 5. A pitch bearing is interposed between each blade flange 15 and the respective blade 4. A pitch actuation system (either electric or hydraulic) is associated to the pitch bearings of the blades 4 for regulating the pitch angle of each blade, i.e. the angular position of each blade about the respective blade longitudinal axis X.

The wind turbine 1 comprises a cooling apparatus 19 for cooling the electric generator 11, as better detailed in the following.

The wind turbine 1 further comprises a control system 18 for operating the wind turbine 1 in a highly efficient manner, by controlling a plurality of variables and parameters. For instance the control system 18 may be used for adjusting the blade pitch angle of the blades 4 of the wind rotor 5 in an optimized manner.

Further the control system 18 may control the cooling apparatus 19 for cooling the electric generator 11, as better detailed in the following. According to possible embodiment of the present invention, the control system 18 or at least a portion thereof may be considered included in the cooling apparatus 19.

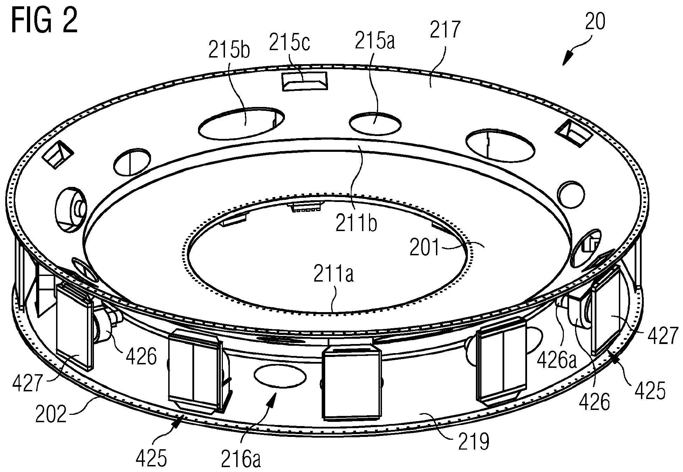

**Figure 2** shows in more detail the stator 20 of the electric generator 11. The stator 20 comprises a radially inner frame structure 201 and a radially outer frame structure 202. The inner frame structure 211 comprises an inner circumferential edge 211a and an outer inner circumferential edge 211b. The opening being defined by the inner circumferential edge 211a is used for receiving a not depicted bearing support structure, which comprises a bearing supporting the shaft 9 schematically depicted in Figure 1.

Along the radial direction the outer frame structure 202 forks apart into two slanted portions, a first inclined annular wall 217 and a second inclined annular wall 219. The two inclined annular walls 217 and 219 define a wedged shaped accommodation space 216a being used for accommodating functional components of the stator assembly such as e.g. cooling installations and conductor coils (not shown in Figure 2), in which during normal operation of the generator magnetic induction takes place.

Within the outer frame structure 216 and specifically within the two inclined annular walls 217 and 219 several openings 215a, 215b, 215c are provided. The first openings 215a are intended as an entrance for a human service technician to enter the accommodation space 216a. The second openings 216b, which have a larger size than the openings 215a, serve as a gate for bringing comparatively large components, in particular the above mentioned cooling installations, into the accommodation space 216a and, if necessary, to remove such large components out from the accommodation space 216a. The third apertures 216c are used for transferring gaseous and/or liquid heat transfer media into the accommodation space 216a and/or out from the accommodation space 216a.

A cooling apparatus 19 is associated to the stator 20. The cooling apparatus 19 comprises a plurality of cooling installations 425 being arranged along a circular line within the accommodation space 216a. According to the exemplary embodiment described here there is provided a plurality of cooling installations 425, wherein each one comprises a heat exchanger 427 and a ventilation device 426, for example constituted by a fan. Each ventilation device 426 is driven by an electric motor 426a.

The speed of each electric motor 426a is controlled by the control system 18 through a frequency converter.

The heat exchanger 427 and a ventilation device 426 together form a gas - liquid interface for a heat transfer from the interior of the electric generator 11 to the exterior of the electric generator 11.

According to the exemplary embodiment described here air as the gaseous heat transfer medium is radially collected from not depicted stator segments surrounding the annular accommodation space 216a and is exhausted axially (via the apertures 215c) from the accommodation space 216a, driven by the ventilation device 426, into cooling path portions arranged within the housing of the generator. Proper air guiding elements may direct the driven air into an airgap extending between the stator segments and permanent magnets. Not depicted cooling slots formed within the stator segments close the cooling path for the gaseous heat transfer medium air.

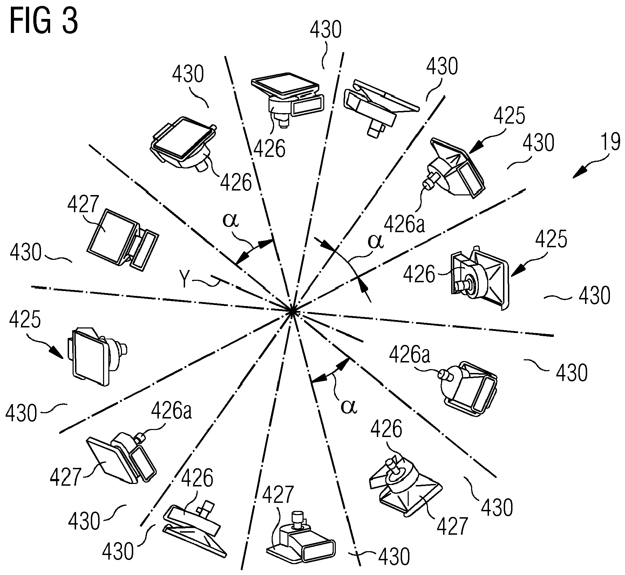

**Figure 3** shows the plurality of cooling installations 425 of the cooling apparatus 19, distributed along the periphery of the outer frame structure 202, i.e. along the outer rims of the two inclined annular walls 217 and 219. According to the exemplary embodiment here described, twelve cooling installations 425 are provided. The presence of twelve cooling installations 425 ideally divide the stator 20 and the electrical generator 11 in twelve circular sectors 430 distributed around the rotational axis Y. On a plane perpendicular to the rotational axis Y, each of the twelve circular sectors 4 has a central angle α of 30 degrees. According to other exemplary embodiments the number of cooling installations may be different, for example the cooling installation by be N, with N being an integer greater than 1. In such embodiments the stator 20 and the electrical generator 11 are also divided in N circular sector 430, each having on a plane perpendicular to the rotational axis Y a central angle α of 360/N degrees.

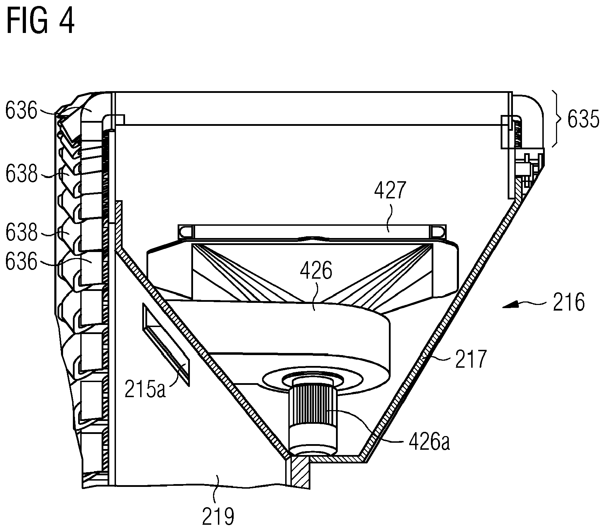

**Figure 4** shows a cross section of the accommodation space 216a formed by the outer frame structure 216 of the stator 20. A stator segment 635 comprising several coil windings 636 is arranged between the first inclined annular wall 217 and the second inclined annular wall 219. It can be seen that according to the embodiment here described the cooling installations 425 are spatially designed in such a manner that they occupy the accommodation space 216a of the outer frame structure 216 in a spatially effective manner. The coil windings 636 axially extends between respective end windings 638, which axially protrudes with respect to the first inclined annular wall 217 and the second inclined annular wall 219. The end windings 638 are the portions of the coil windings 636 which reach the highest temperatures, therefore the temperatures of the end windings 638 are measured through temperature sensors (not shown). The measured temperature of the end windings 638 is used by the control system 18 to operate and control the cooling installations 425, as further detail in the following. Alternatively, according to other possible embodiments of the present invention, the temperature sensors measures the temperature of the coil windings 636 in positioned distanced from the end windings 638

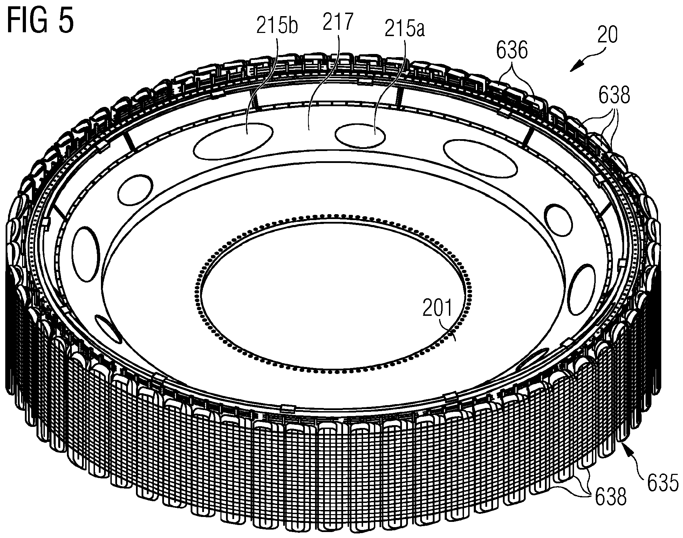

**Figure 5** shows the stator assembly 20 with the plurality of stator segments 635. The entire circumference of the stator 20 is covered with the stator segments 635. As a consequence, along the circumferential direction the coil windings 636 are arranged next to each other without any significant gap. This allows for an effective conversion of mechanical energy, which drives the rotor 30 into electric energy generated from the time alternating magnetic flux which is picked up by the plurality of stator segments 636.

The cooling apparatus 19 is operated according to the method of the present invention, which includes the main steps of:
dividing the electrical generator 11 into a plurality of sectors each including one or more coil windings 636 and one or more cooling installations 425, and
for each sector operating the respective one or more cooling installations 425 as a function of at least one temperature measured in the respective one or more coil windings 636.
According to a possible embodiment of the present invention, the above defined plurality of sectors may be the plurality of circular sector 430 defined and describe with reference to the figure 3.
According to other possible embodiments of the present invention, the sectors may have a shape different from a circular sector. According to the embodiments of the present invention, however, each sector comprises at least one coil winding 636 and one cooling installations, ion such a way that the temperatures and the cooling of each sector can be managed independently from the other sectors.
To such purpose, according to specific embodiments of the present invention, the respective one or more cooling installations are switched on or off as a function of one temperature measured in the respective coil winding(s). According to other specific embodiments of the present invention, the speed of the ventilation device 426 of each cooling installation 425 is controlled as a function of one or more temperature measure measured in the respective coil winding(s) 636. In particular, the respective cooling installation(s) 425 may be operated as a function of one or more temperature measure measured in one or more end windings 638 of the respective coil winding(s) 636.
According to other specific embodiments of the present invention, one or more threshold value for the temperature of the end windings 638 or of the coil windings 636 are defined, the speed of each ventilation device 426 being changed when one of the threshold temperature values are measured in the respective end windings 638 or coil windings 636.

## Claims

1. A method for cooling an electrical generator (11) including a stator (20) and rotor (30) and a cooling apparatus (19), the rotor comprising a plurality of coil windings (636), the cooling apparatus (19) including a plurality of cooling installations (425) in the stator (20), the method including:
dividing the electrical generator (11) into a plurality of sectors (430) each including one or more coil windings (636) and one or more cooling installations (425),
for each sector (430) operating the respective one or more cooling installations (425) as a function of at least one temperature measured in the respective one or more coil windings (636).

2. The method of claim 1, wherein
for each sector (430) the respective one or more cooling installations (425) is switched on or off as a function of at least one temperature measured in the respective one or more coil windings (636).

3. The method of claim 1, wherein
each cooling installations (425) comprises at least one ventilation device (426), the speed of each ventilation device (426) being controlled as a function of at least one temperature measured in the respective one or more coil windings (636).

4. The method of claim 3, wherein
the speed of each ventilation device (426) is changed when a threshold temperature is measured in the respective one or more coil windings (636).

5. The method of any of the preceding claims, wherein the electrical generator (11) is divided into a plurality (N) of circular sectors (430) around a rotational axis (Y) of the electrical generator (11).

6. The method of claim 5, wherein the circular sectors (430) has the same central angle (α) on a plane perpendicular to the rotational axis (Y), each circular sectors (430) comprising one cooling installations (425).

7. The method of any of the preceding claims, wherein the for each sector (430) the respective one or more cooling installations (425) is operated as a function of at least one temperature measured in one or more end windings (638) of the respective one or more coil windings (636).

8. A cooling apparatus (19) for an electrical generator (11) having a rotor comprising a plurality of coil windings (636), the cooling apparatus (19) including a plurality of cooling installations (425) in the stator (20) and a control system (18) for operating the cooling installations (425) according to the method of any of the preceding claims.

9. The cooling apparatus (19) of claim 8, wherein each cooling installation (425) comprises at least one ventilation device (426) rotatable at variable speed.

10. An electrical generator (11) including a cooling apparatus (19) according to claim 8 or 9.

11. A wind turbine (1) including the electrical generator (11) of claim 10.
